# EUROPÄISCHE PATENTSCHRIFT

(11) **EP 1 346 160 B1**
(45) Veröffentlichungstag und Bekanntmachung des Hinweises auf die Patenterteilung: **09.03.2005**
(21) Anmeldenummer: 01989624.0
(22) Anmeldetag: 28.12.2001
(51) Int. Cl.: F16B 37/06, F16B 17/00

(54) **Bolzenelement mit einem Schaftteil und einem Kugelkopf, Zusammenbauteil und Verfahren zur Herstellung eines solchen Bolzenelements**
Bolt Element Comprising a Shaft Part and a Spherical Head, Assembly Component and Method for Producing Such a Bolt Element
Elément tourillon présentant une partie tige et une tête sphérique, composant d'assemblage et procédé de fabrication d'un tel élément tourillon

(30) Priorität: 29.12.2000 DE 10065670
(43) Veröffentlichungstag der Anmeldung: 24.09.2003
(73) Patentinhaber: Profil Verbindungstechnik GmbH & Co. KG, 61381 Friedrichsdorf (DE)
(72) Erfinder: BABEJ, Jiri, 35423 Lich (DE)
(74) Vertreter: Manitz, Finsterwald & Partner GbR
(86) Internationale Anmeldenummer: PCT/EP2001/015370
(87) Internationale Veröffentlichungsnummer: WO 2002/053924

(56) Entgegenhaltungen:
- DE-A- 1 775 764
- DE-A- 19 701 365
- DE-A- 19 949 355

## Beschreibung

Die vorliegende Erfindung betrifft ein Bolzenelement mit einem Schaftteil, das an einem ersten Ende für eine Nietverbindung mit einem Tafelelement, insbesondere mit einem Blechteil ausgelegt ist. Sie betrifft weiterhin ein Zusammenbauteil bestehend aus einem Bolzenelement dieser Art mit einem Bauteil sowie ein Verfahren zur Herstellung eines solchen Bolzenelements.

Ein Bolzenelement der eingangs genannten Art ist an sich (sowie aus der nicht vorveröffentlichten internationalen Anmeldung PCT/EP00/06465 (der europäischen Patentanmeldung 99120559.2 entsprechend) bzw. der entsprechenden deutschen Patentanmeldung 100 33 149.1 sowie aus der ebenfalls nicht vorveröffentlichten internationalen Anmeldung PCT/EP00/06468 (der europäischen Patentanmeldung 00931155.6 entsprechend) bzw. aus der entsprechenden deutschen Patentanmeldung 100 22 152.1) bekannt.

Ein Problem im Maschinenbau liegt darin, preisgünstige Bolzenelemente mit einem Kugelkopf herzustellen. Solche Bolzenelemente werden beispielsweise als Anlenkelemente für Federdämpfer gebraucht, die zur Abstützung von Kofferraumdeckeln oder Motorhauben von PKWs verwendet werden. Solche Anlenkelemente werden aber auch in einer Vielzahl von weiteren Konstruktionen gefunden, beispielsweise bei Gelenkstangen im Betätigungsmechanismus von Vergasern und dergleichen.

Die bekannten Kugelbolzenelement haben am Schaftteil ein Gewinde und einen radial vom Gewinde abstehenden Flansch, damit das Bolzenelement an einem Blechteil oder Träger fest montiert werden kann. Diese Ausbildung des Schaftteils des Bolzenelements macht es auch schwierig, den Kugelkopf herzustellen, da sie Beschränkungen bei der Auslegung der Kaltschlagwerkzeuge für den Kugelkopf verursacht.

Problematisch bei den bekannten Bolzenelementen mit Kugelkopf ist, dass, wenn diese kostengünstig als Kaltschlagteile hergestellt werden, die beweglichen Werkzeugteile, die den Kugelkopf bilden, sich radial auf die Längsachse des Bolzenelementes zubewegen und an den Trennflächen, d.h. dort, wo die Werkzeugteile aufeinander treffen, Grate an der Oberfläche des Kugelkopfes bilden, wobei die Grate sich jeweils in einer radialen Ebene befinden. Diese Grate, wenn auch fein, müssen entweder kostspielig in einem weiteren Vorgang entfernt werden oder man muss mit dem Nachteil leben, dass die Grate relativ schnell zu einem Verschleiß der den Kugelkopf aufnehmenden Pfanne führt, egal ob diese aus Kunststoff oder Metall besteht.

Aufgabe der vorliegenden Erfindung ist es, ein Bolzenelement mit einem Kugelkopf vorzusehen, das extrem preisgünstig hergestellt werden kann und dennoch keinen störenden Grat aufweist. Außerdem soll eine preisgünstige Anbindung des Bolzenelements an ein Bauteil ermöglicht werden, so dass das entsprechende Zusammenbauteil ebenfalls preisgünstig erhältlich ist. Weiterhin soll ein preisgünstiges Verfahren zur Herstellung eines entsprechenden Bolzenelements geschaffen werden.

Zur Lösung dieser Aufgabe wird ein Bolzenelement der eingangs genannten Art vorgesehen, mit dem besonderen Kennzeichen; dass das Schaftteil an seinem anderen Ende eine kugelförmige Ausbildung aufweist, deren Kugeldurchmesser größer ist als der des Schaftteils.

Mit anderen Worten besteht das erfindungsgemäße Bolzenelement im Prinzip lediglich aus einem Kugelkopf und einem zylindrischen Schaftteil, das an seinem dem Kugelkopf abgewandten Ende hohl ausgebildet ist, um eine Nietverbindung mit einem Tafelelement, insbesondere mit einem Blechteil einzugehen. Da der Durchmesser des Schaftteils konstant ist, kann das Funktionselement dadurch hergestellt werden, dass ein zylindrischer Rohling entsprechend dem Anspruch 14 teilweise in eine zylindrische Passage einer Matrize aufgenommen wird und über die Stirnseite der Matrize hinausragt, dass im Bereich des Übergangs der Passage in die Stirnseite eine halbkugelförmige Vertiefung in der Matrize ausgebildet ist, deren Kugeldurchmesser dem Kugeldurchmesser der erwünschten kugelförmigen Ausbildung des Bolzenelementes entspricht, dass ein Werkzeug mit einer ebenfalls halbkugelförmigen Vertiefung auf das aus der Matrize herausragende freie Stirnende des zylindrischen Rohlings gedrückt wird und die Matrize und das Werkzeug in Anlage miteinander gebracht werden, um das aus der Matrize herausragende Ende des zylindrischen Rohlings zu der kugelförmigen Ausbildung durch Kaltverformung umzuformen.

Während beim Stand der Technik die Kaltschlagwerkzeuge, die zur Herstellung des Kugelkopfes verwendet werden, in radialer Richtung gegenüber der Längsachse des entsprechenden Rohlings bewegt werden, können bei der Erfindung die Werkzeuge, von denen es nur zwei gibt, nämlich die Matrize und das damit zusammenarbeitende Werkzeug, sozusagen koaxial zum zylindrischen Rohling angeordnet und aufeinander zubewegt werden, um die kugelförmige Ausbildung durch Kaltverformung des zylindrischen Rohlings zu erzeugen. Dies bedeutet, dass im geschlossenen Zustand der Matrize und des Werkzeugs, d.h. wenn diese aneinander an einer Trennfläche anliegen, diese Trennfläche sich an einer Stelle befindet, die einem Äquator der kugelförmigen Ausbildung entspricht und senkrecht zur Längsachse des zylindrischen Rohlings bzw. des Schaftteils des Bolzenelements steht.

Bei dieser Ausbildung ist es einerseits möglich, die Matrize und das Werkzeug so zu führen, dass sie streng miteinander ausgerichtet sind und nur ein äußerst kleiner Grat, wenn überhaupt, im Bereich des Äquators ausgebildet wird. Dieser Grat ist aber auch nicht mehr so störend, da er bei Verdrehung der Pfanne um die Längsachse des Kugelkopfs herum keine ausgeprägte schabende Wirkung auf die Pfanne ausübt, wie dies bei einem sich in einer radialen Ebene erstreckenden Grat der Fall ist. Da das Schaftteil des Funktionselements zumindest im wesentlichen zylindrisch ausgebildet ist und einen konstanten Außendurchmesser aufweist, kann der zylindrische Rohling äußerst preisgünstig aus zylindrischem Stabmaterial oder Draht oder aus Rohrmaterial hergestellt werden und eine radiale Bewegung von Teilen der Matrize oder der Werkzeuge, um Formmerkmale am Schaftteil zu berücksichtigen, ist nicht mehr notwendig, da bei einem rein zylindrischen Schaftteil keine solchen Formmerkmale vorliegen.

Durch die Ausbildung der Nietverbindung entsprechend der in den oben genannten PCT-Anmeldungen bzw. den entsprechenden deutschen Patentanmeldungen beschriebenen Art, ist es dennoch möglich, das entsprechende Bolzenelement kostengünstig und mit ausreichender Festigkeit an einem Bauteil bzw. an einem Blechteil zu befestigen.

Im ersten Fall (im Falle der o.f PCT/EP00/06465) weist das Bolzenelement eine dort als Kopfteil bezeichnete Ausbildung in Form eines hohlen Zylinders auf, das mit Stanz- und Nietmerkmalen ausgestattet ist und selbststanzend in ein Blechteil eingebracht wird. Dabei wird das freie Ende des hohlen Kopfteils zu einem Nietbördel auf der einen Seite des Blechteils umgeformt und die Wandung des zylinderförmigen Teils wird auf der anderen Seite des Blechteils zu einem Ringfalz ausgebildet, so dass das Blechteil zwischen dem Nietbördel und dem Ringfalz eingeklemmt ist. Hierdurch entsteht eine stabile Verbindung zwischen dem Bolzenelement und dem Blechteil.

Im zweiten Fall (im Falle der o.f. PCT-Anmeldung PCT/EP00/06468) weist das Bolzenelement ebenfalls einen dort als Kopfteil bezeichneten Abschnitt auf, der wiederum als Hohlzylinder ausgebildet ist, jedoch an seinem offenen Stirnende stark gerundet ist und somit eine insgesamt zigarrenähnliche Gestalt aufweist.

In beiden Fällen weist das jeweilige Element in bevorzugten Ausführungsformen einen zumindest im wesentlichen konstanten Durchmesser über seine gesamte Länge auf.

Im Falle des zigarrenförmigen Elementes wird dieses nicht selbststanzend in das Blechteil eingebracht, sondern der hohle Bereich des Bolzenelementes wird dazu genutzt, das Blechteil in einen Umformraum einer Matrize hineinzudrücken und es wird dabei in zwei axial von einander über eine Ringvertiefung beabstandete Ringfalze verformt, wobei das Blechmaterial in die Ringvertiefung hineingedrückt wird und somit eine stabile Nietverbindung zwischen dem Bolzenelement und dem Blechteil erzeugt. Die Schaftteile der jeweiligen Bolzenelemente sind üblicherweise mit einem Außengewinde versehen. Auch andere Ausbildungen, wie eine umlaufende Rille zur Aufnahme einer Federklammer, sind beschrieben. Die in den oben bezeichneten internationalen Anmeldungen bzw. den entsprechenden deutschen Patentanmeldungen beschriebenen jeweiligen Ausbildungen der Nietverbindungen mit dem Blechteil können in identischer Form bei der vorliegenden Erfindung Anwendung finden und stellen bevorzugte Ausführungsformen der für die vorliegende Erfindung verwendbare Nietverbindung dar.

In beiden Fällen führt die Verformung des hohlen Bereiches des Schaftteils an seinem dem Kugelkopf abgewandten ersten Ende zu einem ausreichend breiten Ringfalz, was eine gute Anbindung an das Blechteil ermöglicht und sozusagen eine breite Basis bildet, so dass Kräfte, die in radialer Richtung auf den Kugelkopf einwirken, nicht zu einer Lockerung des Bolzenelementes führen.

Besonders bevorzugte Ausführungsformen des Bolzenelements sowie des Zusammenbauteils, des Verfahrens sowie der Matrize und Werkzeugen nach der vorliegenden Erfindung lassen sich der Figurenbeschreibung sowie den Unteransprüchen entnehmen.

Die Erfindung wird nachfolgend näher erläutert anhand von Ausführungsbeispielen unter Bezugnahme auf die Zeichnung, in welcher zeigen:
- Fig. 1: ein teilweise in Längsrichtung geschnittenes erfindungsgemäßes Bolzenelement,
- Fig. 2: die erfindungsgemäß verwendeten Werkzeuge zur Herstellung des erfindungsgemäßen Bolzenelements der Figur 1,
- Fig. 3: ein Diagramm entsprechend der Fig. 5 der o.f PCT-Anmeldung PCT/EP00/06465, um die Anbringung des erFindungsgemäßen Bolzenelements an ein Blechteil zu erläutern,
- Fig. 4: eine Figur entsprechend der Fig. 2 der o.f PCT-Anmeldung PCT/EP00/06468, um die Anwendung der Nietverbindung dieser PCT-Anmeldung bei der vorliegenden Erfindung darzustellen,
- Fig. 5: eine in Längsrichtung geschnittene Darstellung eines Kugelbolzenelements, das aus Rohrmaterial hergestellt wurde,
- Fig. 6: eine ähnliche Darstellung zu der der Fig. 6 von einem Kugelbolzenelement, das mittels eines Innenhochdruckumformverfahrens hergestellt wurde,
- Fig. 7: ein bevorzugtes Werkzeug zur Anbringung von Kugelbolzenelementen,
- Fig. 8: ein Detail der Matrize der Fig. 7 im Bereich des dort eingezeichneten Rechtecks ohne Blechteil,
- Fig. 9: das Detail der Fig. 8 nach der Anbringung des Kugelbolzenelements und
- Fig. 10A bis 10D: eine Skizzenreihe zur Darstellung von verschiedenen möglichen Blechvorbereitungen.

In der nachfolgenden Beschreibung werden für gleiche oder ähnliche Teile und Merkmale stets die gleichen Bezugszeichen verwendet, so dass eine einmal erfolgte Beschreibung eines Teils oder eines Merkmals auch für ein gleich nummeriertes Teil bzw. Merkmal gilt und die Beschreibung nicht wiederholt werden muss.

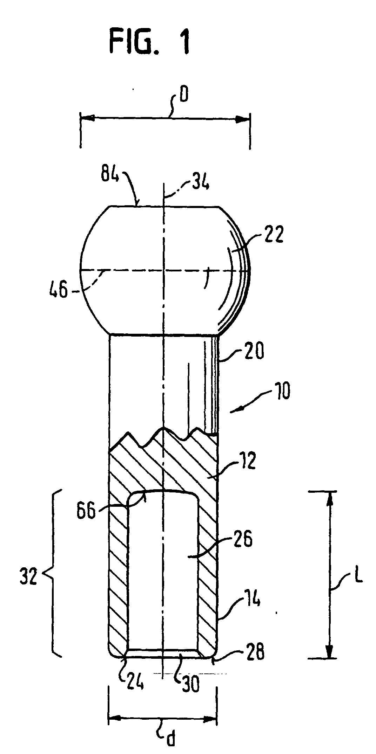

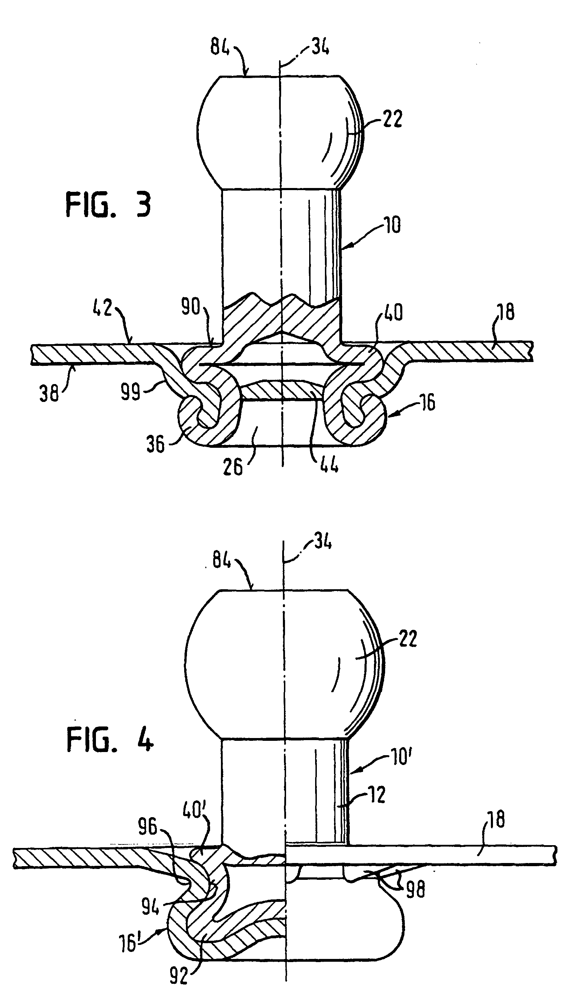

Figur 1 zeigt in einer Seitenansicht ein erfindungsgemäßes Bolzenelement 10 mit einem Schaftteil 12, das an einem ersten Ende 14 für eine Nietverbindung 16 (siehe Fig. 3) mit einem Tafelelement 18 zusammen mit einem Blechteil ausgelegt ist. Das Schaftteil 12 weist an seinem anderen Ende 20 eine kugelförmige Ausbildung 22 auf, deren Kugeldurchmesser D größer ist wie der Durchmesser d des Schaftteils.

Der Durchmesser d des Schaftteils 12 ist über zumindest im wesentlichen dessen gesamte Länge von der kugelförmigen Ausbildung 22 bis zur Stirnseite 24 des ersten Endes 14 zumindest im wesentlichen konstant.

Das erste, für die Nietverbindung 16 mit dem Blechteil 18 ausgelegte Ende 14 des Schaftteils 12 ist hohl ausgebildet und weist zumindest im wesentlichen den gleichen Außendurchmesser d wie der Rest des Schaftteils 12 auf. Der so gebildete Hohlraum 26 ist, wie in Figur 1 gezeigt, zumindest im wesentlichen kreiszylindrisch ausgebildet. Das erste Ende 14 des Schaftteils 12 ist in an sich bekannter Weise mit Stanz- und Nietmerkmalen ausgebildet, und zwar in Form einer abgerundeten Stoß- und Ziehkante 28 und weist innen eine konische Schneidfläche 30 auf. Der Stanz- und Nietabschnitt des Bölzenelementes 10 ist daher gemäß der DE-PS-34 470 06 C2 ausgebildet. Auch der Außenumfang des Schaftteils 12 ist vorzugsweise kreiszylindrisch ausgeführt, d.h. er weist im Querschnitt einen kreisförmigen Umfang auf. Es wäre aber auch denkbar, andere von der Kreisform leicht abweichende Gestaltungen des Schaftteils 12 zu verwenden, beispielsweise eine polygonale Form, wenn dies aus besonderen Gründen nützlich erscheinen sollte.

Der hohle Bereich 32 sollte eine Mindestlänge L aufweisen (in Richtung der mittleren Längsachse 34 des Bolzenelements 10 gemessen), um sicherzustellen, dass ausreichendes Material im hohlen Bereich vorliegt, um bei Ausbildung der Nietverbindung 16 gemäß Fig. 3, das Nietbördel 36 auf der der kugelförmigen Ausbildung 22 abgewandten Seite 38 des Bauteils 18 auszubilden, um die Dicke des Bauteils 18 zu überbrücken und um den Ringfalz 40 auf der der kugelförmigen Ausbildung zugewandten Seite 42 des Bauteils 18 auszubilden.

Es ist auch denkbar, das Bolzenelement insgesamt hohl auszuführen, was den Vorteil hätte, dass das Element aus Rohrmaterial herstellbar wäre und dass die kugelförmige Ausbildung durch ein Hochdruckumformverfahren innerhalb einer entsprechenden Außenform herstellbar wäre.

Bei Verwendung eines hohlen Schaftteils kann dieses auch wahlweise mit einem Innengewinde versehen werden, wodurch nach Ausbildung der Nietverbindung gemäß Fig. 3 und Entfernung des dort gezeigten Stanzbutzens 44, ein Bolzen von dem der kugelförmigen Ausbildung 22 abgewandten Ende des Bolzenelements 10 in das Gewinde hineingeführt werden kann, um die Anbindung an das Blechteil zusätzlich zu verstärken, falls dies erforderlich sein sollte. Ein solches Bolzenelement würde auch die Steifigkeit des Bolzenelements selbst erhöhen. Bei einer solchen Konstruktion (nicht gezeigt) wäre es erforderlich, für entsprechend geformte Scheiben für einen stabilen Sitz des Kopfes des Bolzens auf der Unterseite des Blechteils 18 zu sorgen, wobei es unter Umständen ausreichen würde, das Nietbördel 36 durch einen Preßvorgang mit einer abgeflachten Unterseite (in Fig. 3) zu versehen.

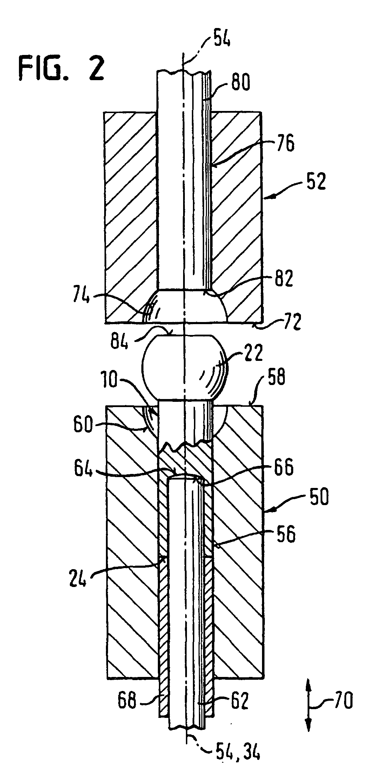

Aus Fig. 1 ist außerdem ersichtlich, dass die kugelförmige Ausbildung 22 eine Äquatorlinie 46 aufweist, die in einer Ebene-liegt, die senkrecht zur Längsachse 34 des Schaftteils steht. An der Stelle der Äquatorlinie 46 ist bei der Herstellung des Bolzenelements im wesentlichen kein Grat bzw. keine Erhebung festzustellen, sondern dieser Äquator 46 zeigt lediglich die Lage der Trennstelle der Werkzeuge, die zur Ausbildung der kugelförmigen Ausbildung verwendet werden. Diese Werkzeuge sind in Fig. 2 näher dargestellt. Sie bestehen aus einer unteren Matrize 50 und einem oberen Werkzeug 52. Die Bezeichnung "untere" und "obere" beziehen sich hier, wie auch an anderen Stellen der Beschreibung und Ansprüche, lediglich auf die Ausrichtung der Zeichnung und stellen keine Beschränkungen der tatsächlichen Ausrichtung der Matrize bzw. des Werkzeugs dar. Diese Teile könnten genauso gut so angeordnet werden, dass die Matrize oberhalb von Werkzeug 52 angeordnet ist oder so, dass die mittlere Längsachse 54 waagerecht oder in einer anderen Ausrichtung angeordnet ist.

Die Matrize 50 weist eine zylindrische Passage 56 auf, die im Bereich der Stirnseite 58 der Matrize in eine halbkugelförmige Vertiefung 60 übergeht, deren Kugeldurchmesser dem Durchmesser D der kugelförmigen Ausbildung 22 des Bolzenelements 10 entspricht. Innerhalb der mittleren Passage 56 der Matrize befindet sich ein zylindrischer Stab 62, dessen oberes Stirnende 64 sich im Hohlraum 26 des Bolzenelements 10 befindet und beispielsweise an der Querwand 66 des Hohlraumes 26 anliegt. An seinem anderen unteren Ende ist der Stab 62 an einer festen Unterlage abgestützt, wie auch die Matrize 50. Der Stab 62 befindet sich innerhalb einer Hülse 68, die entsprechend dem Doppelpfeil 70 hin- und herbewegbar ist, um das fertige Bolzenelement 10 aus der Matrize auszustoßen.

Oberhalb der Matrize 50 und mit dieser koaxial ausgerichtet, befindet sich ein Werkzeug 52, das in seinem Stirnende 70 ebenfalls eine halbkugelförmige Vertiefung 74 aufweist, wobei auch diese halbkugelförmige Vertiefung 74 in eine kreiszylindrische Passage 76 übergeht, die ebenfalls ko-axial zur mittleren Längsachse 54 angeordnet ist. Das Bezugszeichen 80 deutet in dieser Ausführungsform auf eine zylindrische Führung, die sich in der Passage 76 befindet und dessen unteres Stirnende 82 für die Erzeugung der Abflachung 84 am oberen Ende der kugelförmigen Ausbildung 22 sorgt. Diese Führung 80 kann auch mit einer Federeinrichtung vorgespannt werden, so dass sie um einen geringen Betrag ausweichen kann, wenn aus Toleranzgründen zuviel Material für die Ausbildung der kugelförmigen Ausbildung 22 vorhanden ist.

Die Wirkungsweise der Anordnung gemäß Fig. 2 wird nunmehr näher erläutert. Zunächst soll das Bolzenelement 10 weggedacht werden. Als erstes wird ein zylindrischer Rohling (nicht gezeigt), welcher den Hohlraum 26 und die Stanz- und Nietmerkmale aufweist, in die mittlere Passage 56 der Matrize 50 eingeführt, so dass die Querwand 66 auf der oberen Seite des Stabes 54 abgestützt ist. Die Ausstoßhülse 68 ist in diesem Zustand zurückgezogen, so dass die untere Stirnseite 24 des Rohlings einen Abstand von der Hülse 68 aufweist oder diese mit leichtem Anpreßdruck wegdrücken kann. Die obere Matrize 52 wird nunmehr unter der Führung des Führungsstabes 80 nach unten geführt und verformt das obere Stirnende des zylindrischen Rohlings zu der kugelförmigen Ausbildung 22. Am Ende der Bewegung des Werkzeuges 52 auf die Matrize 50 zu, befindet sich die untere Stirnseite 72 des Werkzeuges 52 in Anlage mit der oberen Stirnseite 58 der Matrize 50 und die Trennstelle, d.h. die Position der aneinander liegenden Stirnseiten 72 und 58 ist so gewählt, dass sie an der Äquatorlinie 46 der kugelförmigen Ausbildung liegt. Der zylindrische Rohling ist so bemessen, dass er vor der Schließbewegung des Werkzeuges 52 gegen die Matrize 50 über die Stirnseite 58 der Matrize 50 hinausragt, und zwar um einen solchen Betrag, dass gerade so viel Material vorhanden ist, um im geschlossenen Zustand der Werkzeuge, d.h. bei Anlage der Stirnseite 72 des Werkzeuges 52 gegen die Stirnseite 58 der Matrize 50, den so gebildeten kugelförmigen Raum vollständig auszufüllen.

Sobald die Werkzeuge diese geschlossene Stellung erreicht haben, ist das Bolzenelement fertig, das Werkzeug 52 wird wieder nach oben weg von der Matrize 50 gefahren und die Hülse 68 nach oben bewegt, um das fertige Bolzenelement 10, wie in Figur 2 gezeigt, aus der Matrize 50 auszustoßen. Daraufhin kann ein neuer zylindrischer Rohling in die Passage 56 eingeführt werden und das Verfahren wird wiederholt, um ein weiteres Bolzenelement herzustellen.

Die Matrize 50 kann bei diesem Herstellungsverfahren im unteren Werkzeug einer Presse angeordnet werden, während das obere Werkzeug 52 am oberen Werkzeug der Presse oder an einer Zwischenplatte der Presse angebracht ist.

Das Verfahren zur Anbringung des Bolzenelements 10 an ein Blechteil 18, wie in Figur 3 gezeigt, ist in der oben erwähnten PCT-Anmeldung PCT/EP00/06465 im Detail beschrieben und wird hier nicht weiter erläutert, da die genaue Art der Ausbildung dieser Nietverbindung nicht Gegenstand der vorliegenden Erfindung ist. Da das untere Ende des Bolzenelements 10 mit Stanz- und Nietmerkmalen ausgestattet ist, kann dieses selbststanzend in das Blechteil 18 eingeführt werden, wodurch der Stanzbutzen 44 entsteht. Wie in Figur 3 gezeigt, ist dieser Stanzbutzen in den verformten Hohlraum 26 des Bolzenelements 10 eingeklemmt und trägt zur Stabilität der Nietverbindung 16 bei. Die obere Seite 90 des Ringfalzes 40 ist so angeordnet, dass sie in etwa in der gleichen Ebene liegt wie die obere Seite 42 des Blechteils 18 und sie stellt daher kein Hindernis für die Bewegungsfreiheit einer auf der kugelförmigen Ausbildung 22 aufgesetzten Pfanne dar. Man sieht durch den Verlauf des (ursprünglich flachen) Blechteils 18 im Bereich der Nietverbindung 16, wie eine äußerst stabile Anbindung des Bolzenelements 10 am Blechteil 18 geschaffen ist.

Das Bolzenelement 10 muß nicht zwangsweise so ausgeführt werden wie in Figur 1 gezeigt, sondern es sind andere Ausbildungen des ersten Endes 14 denkbar, die auch für eine Nietverbindung mit einem Blechteil geeignet sind. Insbesondere kommt hier eine Ausbildung in Frage, wie in Figur 2 der o.f PCT-Anmeldung PCT/EP00/06468 gezeigt. Diese Ausbildung ermöglicht eine Nietverbindung 16' wie in Figur 4 gezeigt und wird genauso realisiert, wie in der erwähnten PCT-Anmeldung angegeben. Vorteilhaft bei dieser Art der Nietverbindung ist, dass das Blechteil 18 nicht durchlocht wird, so dass eine wasserdichte Verbindung vorliegt. Wie in der entsprechenden PCT-Anmeldung nachzulesen, ist die Nietverbindung 16' hier so vorgenommen worden, dass der hohle Bereich des Bolzenelements zu zwei Ringfalzen ausgebildet ist, und zwar einem oberen Ringfalz 40' und zusätzlich einem unteren Ringfalz 92, die zwischen sich eine ringförmige Vertiefung 94 bilden. Das Blechmaterial ist durch die Anbringung des Bolzenelements in diese ringförmige Vertiefung 94 eingedrückt worden, wie bei 96 in Figur 4 gezeigt, und fest zwischen den zwei Ringfalzen 40' und 92 geklemmt. Die Bezugszeichen 98 deuten in diesem Beispiel auf Verdrehsicherungsnasen, die in der PCT-Anmeldung wichtig sind, wenn das entsprechende Element Drehmomente um die Längsachse aufnehmen soll. Da es sich hier um ein Bolzenelement mit einem Kugelkopf handelt, der keine Drehmomente aufnehmen muß, sind solche Verdrehsicherungsnasen 98 hier nicht zwingend erforderlich und die entsprechenden Formmerkmale der Werkzeuge, die zur Ausbildung dieser Verdrehsicherungsnasen notwendig sind, können weggelassen werden.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder deren Legierungen.

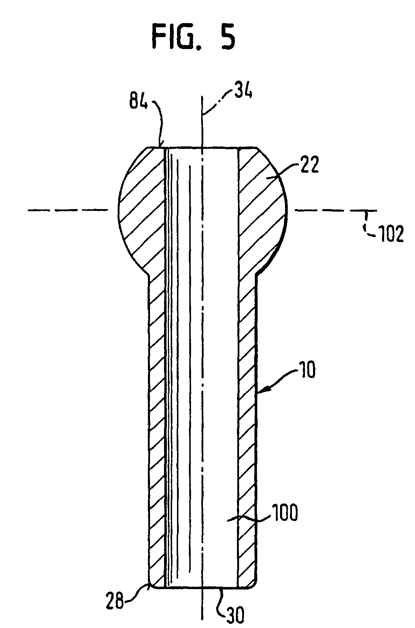

Figur 5 zeigt einen axialen Querschnitt durch ein Kugelbolzenelement 10 ähnlich dem Kugelbolzenelement 10 der Fig. 1, jedoch mit dem Unterschied, dass das Element aus Rohrmaterial hergestellt wurde und daher eine durchgehende mittlere Längspassage 100 mit kreisförmigem Querschnitt aufweist. Das untere Stirnende des Elementes gemäß Fig. 5 kann entsprechend dem unteren Stirnende des Bolzenelementes der Fig. 1 mit Stanz- und Nietmerkmalen in Form einer abgerundeten Stoß- und Ziehkante 28 und eine konische Schneidfläche 30 ausgebildet werden, ist aber hier in einer Ausführung gezeigt, bei der die konusförmige Schneidfläche 30 auf ein Minimum reduziert wurde, was auch möglich ist. Das untere Ende der Längspassage 100 entspricht dem Hohlraum 26 des Kugelbolzenelements 10 der Fig. 1 bzw. bildet diesen Hohlraum.

Das Kugelbolzenelement 10 wird entsprechend dem Kugelbolzenelement 10 der Fig. 1 in einem Werkzeug entsprechend der Fig. 2 hergestellt, nur mit dem Unterschied, dass der Führungsstab 80 vorzugsweise mit einem zylindrischen Vorsprung (nicht gezeigt) ausgestattet wird, der in die mittlere Längspassage 100 des rohrförmigen Rohlings bzw. des Kugelbolzenelements hineinpasst und sich bis etwa das obere Stirnende des Führungsstabes 62 nach unten erstreckt, um das Rohrmaterial von innen bei der Ausbildung des Kugelkopfes abzustützen und unerwünschte Verformungen des Rohrmaterials zu vermeiden. Der Absatz zwischen dem Stab 80 und dem nach unten gerichteten zylindrischen Vorsprung, der auch als Führungszapfen dient und in die mittlere Längspassage des Elements eingeführt wird, bildet eine radiale Schulter, die für die Abflachung 84 am oberen Ende des Kugelkopfs sorgt.

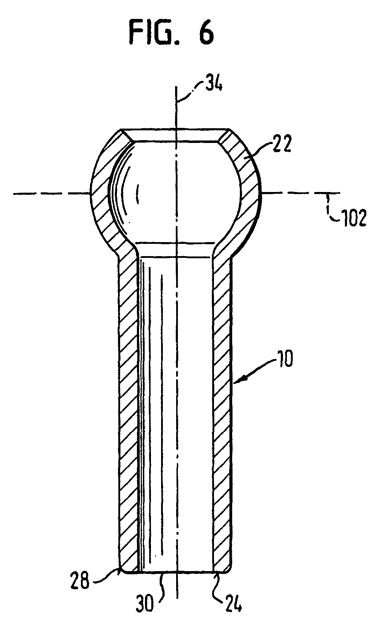

Fig. 6 zeigt eine alternative Ausbildung eines Kugelbolzenelements 10, der aus Rohrmaterial hergestellt wird. In diesem Falle wird ein kreiszylindrischer Rohrabschnitt in eine zweiteilige Form (nicht gezeigt) eingelegt, die die äußere Form des fertigen Kugelbolzenelements der Fig. 6 als Hohlraum aufweist. Die in Fig. 6 untere Stirnseite 24 des Kugelbolzenelements 10 stützt sich an eine Querwand des Hohlraums der Form ab und es wird über das in Fig. 6 obere Stirnende des Rohrabschnitts mittels einer geeigneten Düse hydraulische Flüssigkeit unter hohem Druck in das Innere des Rohrabschnitts hineingedrückt, so dass die kugelige Form des Kugelkopfs durch den hohen an der Innenseite aufgebrachten Druck erzeugt wird. Die zweiteilige Form, die nicht gezeigt ist jedoch im Bereich des Kugelbolzenelements entsprechend dem Werkzeug 52 und der Matrize 50 ausgebildet ist, hat eine Trennfläche zwischen den beiden Hälften der Form in der Höhe der Ebene 102, die in Fig. 6 gezeigt ist. Nach Ausbildung des Kugelbolzenelements 10 wird die Form geöffnet und der Kugelbolzenelement kann aus der Form entfernt werden, ggf. mit Hilfe eines Schiebers der in axialer Richtung des Schaftteils des Kugelbolzens innerhalb der einen Formhälfte gleitet und vorzugsweise auf die in Fig. 6 untere Stirnseite 24 des Kugelbolzenelements 10 drückt.

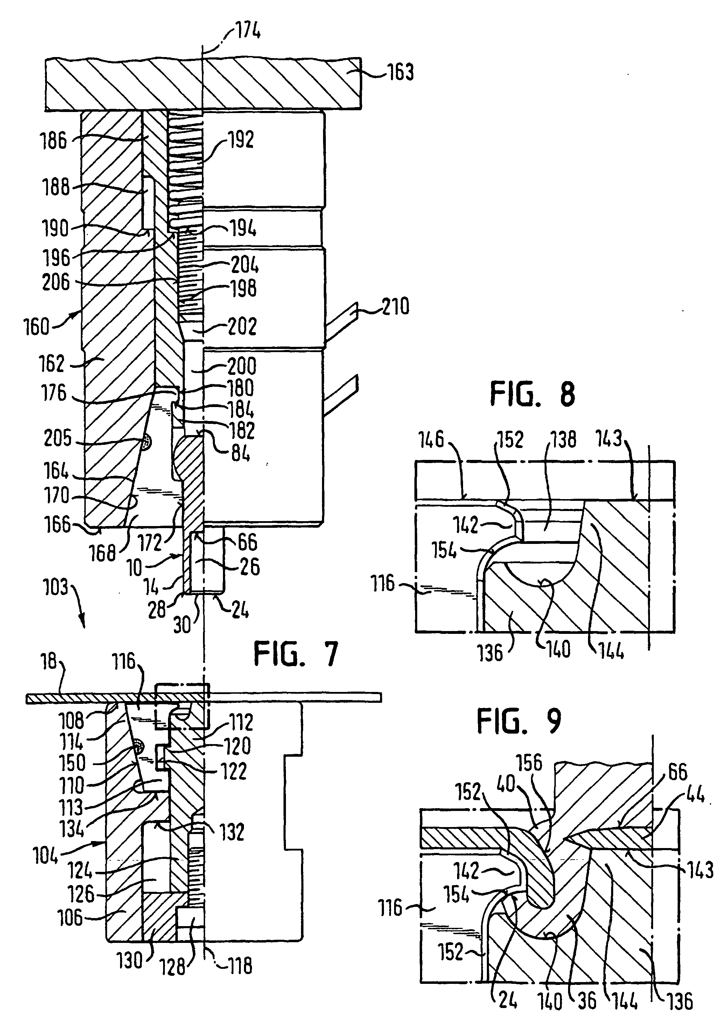

Fig. 7 zeigt ein bevorzugtes Werkzeug 104 zur Anbringung eines Kugelbolzenelements, beispielsweise nach Fig. 1 an ein plattenförmiges Werkstück in Form eines Blechteils 18. Das Blechteil 18 ist auf der oberen Stirnseite einer Matrize 104 abgestützt, das in seinen Grundzügen den Matrizen nach der o.f. nicht vorveröffentlichen, europäischen Patentanmeldung 99120559.2 bzw. der o.f. ebenfalls nicht vorveröffentlichten europäischen Patentanmeldung 00931155.6 ähnelt. Entsprechend der Fig. 9 der erstgenannten Patentanmeldung weist die hier vorliegende Matrize 104 einen hohlen Körper 106 mit einer zur Abstützung eines Blechteils vorgesehenen Stirnseite 108, die über eine sich konusförmig verjüngende Wand 110 in einen ein Anschlagelement 112 aufweisenden Raum übergeht, wobei das Anschlagelement 112 zur Bildung eines im Querschnitt keilförmigen Ringspalts 113 von der sich konusförmig verjüngenden Wand beabstandet ist.

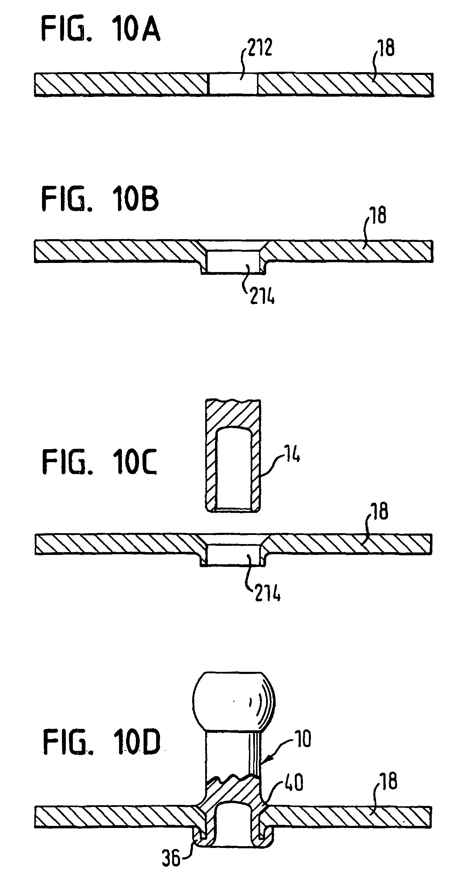

Im keilförmigen Ringspalt befinden sich mehrere baugleiche segmentartige Formteile, beispielsweise von 1 bis 8, insbesondere 4 Formteilen 116, die um die Längsachse 118 der Matrize herum im keilförmigen Ringspalt 113 angeordnet sind und sowohl an der konusförmigen Wand 110 als auch am Anschlagelement 112 abgestützt sind. Die Formteile 116 können entweder so angeordnet werden, dass sie den Ringspalt 113 um die Längsachse 118 herum vollständig ausfüllen, d.h. so dass keine Struktur zwischen benachbarten Formteile 116 vorhanden ist bspw. Entsprechend der Fig. 10 der o.f. EP-Anmeldung 99120559.2 oder es kann feste Struktur der Matrize zwischen den benachbarten Formteilen der Matrize vorliegen, wie bei der Matrize der Fig. 1 und 2 der o.f. EP-Anmeldung 00931155.6 bzw. der früheren verwandten Matrize des gleichen Erfinders vorgesehen

Das Anschlagelement in dieser Ausführungsform ist aber etwas anders ausgelegt als in den genannten EP-Anmeldungen.

Zunächst ist ersichtlich, dass das Anschlagelement 112 einen sich radial erstreckenden ringförmigen Bund 120 aufweist, der in entsprechende Nuten 122 der Formteile eingreift, wobei das Anschlagelement 112 mit den Formteilen in axialer Richtung 118 der Matrize 104 beweglich ist. Das untere Ende 124 des Anschlagelements ragt in einen Hohlraum 126 des Matrizenkörpers 106 hinein und ist dort mit einem mittels einer Schraube 128 angeschraubten Scheibenelement 130 abgeschlossen. In diesem Hohlraum 126 befindet sich zwischen der radial nach innen ragenden Schulter 132 des Außenteils der Matrize und der Scheibe 130 eine Schraubendruckfeder, die ausgelegt ist, um das Anschlagelement 112 nach unten zu ziehen und mit dem Anschlagelement 112 über den ringförmigen Bund 120 die Formteile 116. Die maximale Bewegung der Formteile nach unten ist durch die Oberseite 134 der Ringschulter begrenzt, an der die Formteile zur Anlage gelangen. Dies begrenzt auch über den Bund 120 und die Nuten 122 die tiefstmögliche Stellung des Anschlagelements 112. Das obere Ende 136 des Anschlagelements 112, das in vergrößerter Form in Fig. 8 und 9 zu sehen ist, bildet einen Umformraum 138 für das rohrförmige Ende 14 des Kugelbolzenelements 10. Dieser ringförmige Umformraum hat eine im Querschnitt halbkreisförmige Rollfläche 140 in seinem Bodenbereich, der deutlich unterhalb der radial nach innen ragenden Nasen 142 der Formteile 116 angeordnet ist. Die Stirnseite 143 des mittleren Pfostens 144 des Anschlagelements liegt bündig mit der in Fig. 8 oberen Seite 146 der Formteile 116, die wiederum bündig mit der oberen Seite des Außenteils 106 der Matrize 104 und des die Matrize aufnehmenden Werkzeugs (nicht gezeigt) liegt.

Das Bezugszeichen 150 deutet auf ein Ringfederelement, das die Formteile mit dem Anschlagelement zusammenhält.

Wie aus Fig. 8 ersichtlich, haben die Formteile gerundete Kanten 152, was aus der Doppellinienführung ersichtlich ist.

Während bei der Matrize nach der o.f. PCT-Anmeldung PCT/EP00/06468 das Blechteil bei der Einstanzung des entsprechenden Elements in einen Umformraum der Matrize zu einer topfartigen Vertiefung geformt wird, wirkt der mittlere Pfosten 144 mit den Stanz- und Nietmerkmalen 28, 30 des unteren Endes des Kugelbolzenelements 10 zusammen um einen Stanzbutzen 44 aus dem Blechteil herauszustanzen, ähnlich wie bei der Umformmatrize nach dem deutschen Patent DE-PS 3447006 beschrieben ist.

Die untere Stirnseite 24 des Kugelbolzenelements stanzt somit in Zusammenarbeit mit der oberen Stirnseite 143 des mittleren Pfostens 144 des Anschlagelements 112 das Blechteil 18 durch und zieht das Blechmaterial um das so gebildete Loch herum über die gerundeten Nasen 142 der Formteile in den Umformraum 138 der Matrize hinein. Gleichzeitig wird das Material des rohrförmigen Endes des Kugelbolzenelements 10 durch die Rollfläche des Anschlagelements der Matrize radial nach außen und dann wieder nach oben gelenkt, bis die freie Stirnseite 24 des Kugelbolzenelements 10 an der Unterseite 154 der radial nach innen ragenden Nasen 142 der Formteile 116 anstößt.

Man sieht aus Fig. 9, dass die konusförmige Ausformung 156 des Blechteils 18 in den Umformraum 138 der Matrize hinein nunmehr formschlüssig innerhalb des umgebördelten Stirnendes 14 des Kugelbolzenelements 10 liegt und dass zumindest im Wesentlichen der gesamte Umformraum 138 voll mit Metall ist. Sobald diese Stellung erreicht ist, kann das Material des Kugelbolzenelements nicht mehr in den Umformraum 138 fließen, die Länge des rohrförmigen Bundes ist aber so bemessen, dass der bisher erwähnte Ringfalz 40 sich ausbilden kann, was in Fig. 9 gezeigt ist. Die Bewegung der freien Stirnseite 24 des Kugelbolzenelements wird wirksam an der Unterseite 154 der Nasen der Formteilen 116 gestoppt, so dass nunmehr der Ringfalz 40 gebildet werden kann.

Man merkt, dass der Stanzbutzen 44, der beim Durchstanzen des Blechteils entstanden ist, zwischen dem oberen Stirnende 143 des mittleren Pfostens 144 und der Querwand 66 innerhalb des Hohlraums 26 eingequetscht wird und dort die Verbindung zum Blechteil versteift.

Beim Öffnen der Presse nach dem Einstanzen des Kugelbolzenelements 10 wird das Kugelbolzenelement zunächst angehoben und hebt gleichzeitig das Blechteil, an dem er nunmehr angebunden ist, aus der Matrize heraus. Dabei bewegen sich die Formteile 116 gemeinsam mit dem Anschlagelement 112 nach oben, wobei die Schraubenfeder im Hohlraum 126 zusammengedrückt wird, bis die Kräfte, die im Bereich des Nietbördels 36 wirken ausreichen, um die Formteile 116 radial nach außen vom Nietbördel 36 wegzudrücken, wodurch das Zusammenbauteil bestehend aus dem Kugelbolzenelement 10 und dem Blechteil 18 von der Matrize 104 freigegeben wird.

Das obere Teil 160 des Werkzeugs 104 gemäß Fig. 7, stellt einen Setzkopf dar, der zur Anbringung von Kugelbolzenelementen wie 10 an das Blechteil 18 ausgelegt ist und zu diesem Zweck über einen nicht dargestellten Halter an ein oberes Werkzeug 163 einer Presse bzw. an eine Zwischenplatte einer Presse oder in einer umgekehrten Anordnung an einem unteren Werkzeug der Presse angebracht werden kann.

Der Setzkopf 160 ist hier ausgerichtet, um eine zentrische Fügung des Kugelbolzenelements mit der Matrize zu erreichen und verhindert ein Ausknicken des Bolzenelements beim Einstanzen. Die Matrize gewährleistet einen Abbruch der Bördelung beim Anlaufen der freien Stirnseite 24 des Nietbördels 36 gegen den Matrizeneinsatz, d.h. an die Formteile 116 und damit einen definierten Startzeitpunkt für das Ausbauchen des Schaftes 14 zur Ausbildung des Ringflansches 40 und zwar auch dann wenn nur ein Formteil 116 vorgesehen wird, was grundsätzlich bei einer Matrizenkonstruktion ähnlich der o.f. EP-Anmeldung 00931155.6 möglich ist.

Der Setzkopf 160 hat einen äußeren rohrförmigen Teil 162 mit einer konusförmigen Ausnehmung 164 am unteren Stirnende 166, in der wiederum mehrere Formteile, beispielsweise vier Formteile 168 aufgenommen sind, von denen nur das eine Formteil 168 in Fig. 7 ersichtlich ist. Die Formteile haben jeweils eine konusförmige Außenwand 170, die komplementär zu der konusförmigen Wandung 164 des äußeren Teils 162 des Setzkopfes 160 ausgestaltet ist.

Im unteren Bereich der Formteile in Fig. 7 haben diese radial nach innen erstreckende Backenflächen 172, die am Schaftteil 14 des Kugelbolzenelements 10 angreifen und als teilzylindrische Flächen ausgebildet sind, damit eine flächige Anlage am Kugelbolzenelement möglich ist, um die erforderliche Ausrichtung des Kugelbolzenelements 10 mit der mittleren Längsachse 174 des Setzkopfs, die koaxial zur mittleren Längsachse 118 der Matrize steht, zu gewährleisten.

Im oberen Bereich haben die Formteile 168 radial nach innen gerichtete Nasen 176, die sich in eine Nut 180 in einer verschiebbaren Hülse 182 des Setzkopfs 160 hineinerstrecken. Die untere Begrenzung 184 der Nut hintergreift die Nasen, so dass die Formteile 168 zwangsgeführt sind, d.h. mit der Hülse 182 axial beweglich sind.

Eine Ringfeder 184 umfasst die Formteile 168 und stellt daher sicher, dass die Formteile 168 nicht verloren gehen. Die Hülse 182 hat in ihrem oberen Bereich einen radial nach außen gerichteten Bund 186, der in einem kreiszylindrischen Hohlraum 188 des äußeren Teils 162 des Werkzeugs 160 beweglich ist, wobei eine radial nach innen gerichtete Ringschulter 190 des äußeren Teils 162 des Werkzeugs 160 den Hohlraum 188 nach unten begrenzt und einen Anschlag für den radial nach außen gerichteten Bund 186 der Hülse 182 bildet.

Innerhalb des oberen Bereichs der Hülse befindet sich eine leichte Schraubendruckfeder 192, die an ihrem unteren Stirnende 194 an einer radial nach innen gerichteten Schulter 196 der Hülse 182 anliegt und an ihrem oberen Stirnende in Fig. 7 am oberen Werkzeug 163 der Presse abgestützt ist. In dieser Ausführungsform spannt die Feder daher die Hülse leicht in Richtung radial nach unten.

Innerhalb einer zylindrischen Bohrung 198 der Hülse 182 im unteren Bereich der Hülse befindet sich ein Stempelstift 200 mit einem konusförmigen oberen Ende 202, das an einer entsprechenden konusförmigen Fläche innerhalb der verschiebbaren Hülse 182 abgestützt ist, so dass der Stempelstift 200 nach unten aus der Hülse 182 nicht herausfallen kann. Oberhalb des Stempelstifts 200 befindet sich eine Madenschraube 204, die in eine Gewindebohrung 206 der verschiebbaren Hülse eingeschraubt ist, um zu verhindern, dass der Stempelstift 200 nach oben entweichen kann. Die Schraubverbindung zwischen der Madenschraube 204 und der Hülse 182 überträgt schließlich auch die Druckkräfte, die vom oberen Werkzeug 163 der Presse kommend die Hülse 182 und daher auch die Madenschraube 204 und den Stempelstift 200 nach unten drücken. Man sieht, dass der Stempelstift 200 auf der Abflachung 84 am oberen Stirnende des Kugelbolzenelements 10 zur Anlage kommt.

Beim Schließen der Presse kann daher das Kugelbolzenelement nicht nach oben ausweichen und die nach unten gerichteten Kräfte führen zum oben beschriebenen Durchstanzen des Blechteils sowie zur Umformung des unteren Stirnendes 14 des Kugelbolzenelements 10 und Ausbildung des Ringfalzes 40. Wenn diese Umformarbeiten abgeschlossen sind, liegt das untere Stirnende 166 des oberen Werkzeugs 160 auf dem Blechteil 18 auf und drückt dieses gegen das untere Werkzeug in Form der Matrize 104.

Beim Öffnen der Presse hebt das obere Werkzeug 160 das Kugelbolzenelement 10 mit dem angebrachten Blechteil 18 aus der Matrize, so dass die Matrize das Zusammenbauteil freigibt, wie oben beschrieben. Das Blechteil stößt dann an andere Teile der Presse (nicht gezeigt), so dass eine nach unten wirkende Kraft auf den Kugelbolzenelement ausgeübt wird. Das Kugelbolzenelement zieht somit die Formteile teilweise aus dem Außenteil des oberen Werkzeugs heraus, soweit, bis der sich nach außen erstreckende Bund 186 der Hülse 182 in Anlage mit der radial nach innen gerichteten Ringschulter 190 kommt. Diese axiale Bewegung reicht aus, um den Kugelkopf von den Formteilen 168 freizugeben, da diese, wenn sie teilweise aus dem äußeren Teil des oberen Werkzeugs herausgezogen sind, radial nach außen ausweichen können. Um diese radial nach außen gerichtete Bewegung zu begünstigen, weisen die Formteile 168 im Bereich der axial oberen Enden der Backenflächen 172 Schrägflächen oder Formflächen 208 auf, die mit der gerundeten Kugelfläche des Kugelkopfs des Kugelbolzenelements zusammenarbeiten.

Das Zusammenbauteil bestehend aus dem Kugelbolzenelement und dem Blechteil kann nunmehr aus dem Arbeitsbereich des Werkzeugs gemäß Fig. 7 entfernt werden.

Da die Schraubendruckfeder die Formteile in der geöffneten Position hält, kann ein neues Kugelbolzenelement von unten in das obere Werkzeug eingeführt und nach oben gedrückt werden (bis die Backenflächen 172 der Formteile wieder an den Schaftteil 14 des Kugelbolzenelements 10 greifen und die Schraubenfeder komprimiert ist). Die bspw. aus Polyurethan bestehende Ringfeder 205, die die Formteile 168 aufeinander zu drückt, ist ausreichend stark bemessen um durch Reibung an der konusförmigen Wand 164 die Hülse 182 mit den Formteilen 168 in der in Fig. 7 gezeigten Position zu halten. Das neue Kugelbolzenelement nimmt nunmehr die Lage des Kugelbolzenelements 10 der Fig. 7 an.

Ein neuer Blechteil 18 kann nunmehr in die Presse eingeführt werden und wie bisher beschrieben, kann dann das neue Kugelbolzenelement 10 mit dem neuen Blechteil 18 vernietet werden.

Anstelle das Bolzenelement von unten bspw. per Hand zwischen die Formteile bzw. Formsegmente 168 des oberen Werkzeugs einzuführen, können in einer automatisierten Ausführungsform die Kugelbolzenelemente 10 durch einen schräg gestellten Führungskanal 210 in den Raum zwischen den Formteilen eingeführt werden.

Wenn beispielsweise drei Formteile 168 vorgesehen sind, kann der schräg gestellte Führungskanal in den Zwischenraum zwischen zwei der segmentartigen Formteile 168 hinein führen. Dies ermöglicht es, das Kugelbolzenelement 10 aus der schräg gestellten Lage des Führungskanals 210 in die senkrecht ausgerichtete Position zwischen den Formteilen 168 zu gelangen. Eine ähnliche Vorgehensweise ist aber auch dann möglich, wenn das Werkzeug 160 mit 4 aneinander liegenden Formteilen 168 versehen ist, sofern der notwendige Raum für den Führungskanal 210 geschaffen werden kann.

Die Figurenreihe 10A, 10B, 10C und 10D zeigt schließlich, dass es möglich ist, das Kugelbolzenelement auch in dickere Bleche einzuführen. Bei Blechen bis etwa 1,5 mm Dicke reicht es, das Blechteil 18 durchzustanzen oder wie in Fig. 10A bei 212 gezeigt vorzulochen.

Bei Blechdicken ab 1,5 mm ist es aber günstig, eine Blechvorbereitung durchzuführen, damit das Blechteil im Bereich des Loches 214 die Form gemäß Fig. 10B erhält. Eine solche Blechvorbereitung ist beispielsweise auch im Zusammenhang mit dem so genannten Klemmlochnietverfahren (europäisches Patent 539793 ) und im Zusammenhang mit den so genannten EBF-Elementen in der PCT-Anmeldung PCT/EP96/04188 beschrieben, weshalb es hier nicht wiederholt wird. Die Fig. 10C zeigt, dass der Innendurchmesser des Loches 214 bei der Vorlochung und Vorbereitung des Blechteils zumindest im Wesentlichen dem Außendurchmesser d des unteren Stirnendes 14 des Kugelbolzenelements entspricht. Fig. 10D zeigt schließlich die Lage nach der Anbringung des Elements, das entsprechend der o.f. PCT-Anmeldung PCT/EP00/06465 ausgeführt wird.

Es bestünde auch die Möglichkeit, die Matrize gemäß Fig. 7 zur Anbringung des Bolzenelements in das vorbereitete Blechteil zu verwenden, wobei hier kein Stanzbutzen entsteht, da das Blechteil vom Kugelbolzenelement nicht durchstanzt wird. Die Einbausituation zeigt sich ähnlich wie bei Fig. 10D, nur ist zwischen der umgebördelten Stirnseite 24 des Nietbördels 36 und dem Blechteil ein Zwickel vorhanden, der durch die Nasen 142 der Formteile 116 der Matrize 104 erzeugt wird.

## Patentansprüche

1. Bolzenelement (10) mit einem Schaftteil (12), das an einem ersten Ende (14) für eine Nietverbindung (16) mit einem Tafelelement (18), insbesondere mit einem Blechteil ausgelegt ist,
**dadurch gekennzeichnet,**
**dass** das Schaftteil (12) an seinem anderen Ende (20) eine kugelförmige Ausbildung (22) aufweist, deren Kugeldurchmesser (D) größer ist als der (d) des Schaftteils.

2. Bolzenelement nach Anspruch 1,
**dadurch gekennzeichnet,**
**dass** das Schaftteil (12) über zumindest im wesentlichen seine gesamte Länge von der kugelförmigen Ausbildung (22) bis zum ersten Ende (14) zumindest im wesentlichen einen konstanten Durchmesser (d) aufweist.

3. Bolzenelement nach Anspruch 1 oder 2,
**dadurch gekennzeichnet,**
**dass** das erste für die Nietverbindung (16) mit dem Tafelelement (18) ausgelegte Ende (14) des Schaftteils (12) hohl ausgebildet ist und zumindest im wesentlichen den gleichen Außendurchmesser wie das Schaftteil aufweist.

4. Bolzenelement nach Anspruch 3,
**dadurch gekennzeichnet,**
**dass** das erste Ende (14) des Schaftteils (12) in an sich bekannter Weise mit Stanz- und Nietmerkmalen ausgebildet ist.

5. Bolzenelement nach Anspruch 4,
**dadurch gekennzeichnet,**
**dass** das hohle erste Ende des Schaftteils (12) von einer kreiszylindrischen Mantelfläche in eine abgerundete Stoß- und Ziehkante übergeht und innen eine konische Schneidfläche (30) aufweist.

6. Bolzenelement nach einem der vorhergehenden Ansprüche 3 bis 5,
**dadurch gekennzeichnet,**
**dass** der Innenraum des hohlen ersten Endes des Schaftteils (12) zumindest im wesentlichen kreiszylindrisch ausgebildet ist.

7. Bolzenelement nach einem der vorhergehenden Ansprüche 3 bis 6,
**dadurch gekennzeichnet,**
**dass** der hohle Bereich des Schaftteils (12) am ersten Ende mindestens so lang bemessen ist, dass ausreichend Material im hohlen Bereich vorliegt, um ein Nietbördel (36) auf der der kugelförmigen Ausbildung (22) abgewandten Seite des Bauteils auszubilden, um die Dicke des Bauteils zu überbrücken und um einen Ringfalz (40) auf der der kugelförmigen Ausbildung zugewandten Seite des Bauteils auszubilden.

8. Bolzenelement nach einem der vorhergehenden Ansprüche,
**dadurch gekennzeichnet,**
**dass** das gesamte Bolzenelement (10) hohl ausgebildet ist.

9. Bolzenelement nach einem der vorhergehenden Ansprüche,
**dadurch gekennzeichnet,**
**dass** das hohle Schaftteil (12) mit einem Innengewinde versehen ist.

10. Bolzenelement nach einem der vorhergehenden Ansprüche
**dadurch gekennzeichnet,**
**dass** die kugelförmige Ausbildung (22) eine Äquatorlinie (46) aufweist, die in einer Ebene liegt, die senkrecht zur Längsachse des Schaftteils (12) steht.

11. Zusammenbauteil bestehend aus einem Bolzenelement (10) nach einem der Ansprüche 1 bis 10 und einem Bauteil,
**dadurch gekennzeichnet,**
**dass** sich auf der der kugelförmigen Ausbildung (22) abgewandten Seite des Bauteils ein Nietbördel (36) befindet, während auf der der kugelförmigen Ausbildung zugewandten Seite des Bauteils ein Ringfalz angeordnet ist und das Bauteil im Bereich der Verbindung zum Schaftteil (12) zwischen dem Ringfalz und dem Nietbördel geklemmt ist.

12. Zusammbenbauteil nach Anspruch 10,
**dadurch gekennzeichnet,**
**dass** der Ringfalz in einer Ringvertiefung im Blechteil angeordnet ist, wobei eine der kugelförmigen Ausbildung (22) zugewandte Ringfläche des Ringfalzes entweder geringfügig unterhalb oder geringfügig o-berhalb der dem Schaftteil (12) zugewandten Seite des Bleches im Bereich der Nietverbindung angeordnet ist oder auf der gleichen Höhe wie diese Seite des Bauteils liegt.

13. Zusammenbauteil nach Anspruch 10 oder 11,
**dadurch gekennzeichnet,**
**dass** ein Stanzbutzen (44) innerhalb des ringförmigen Bördels geklemmt ist und daher gegen diesen drückt.

14. Verfahren zur Herstellung eines Bolzenelements (10) nach einem der vorhergehenden Ansprüche 1 bis 10 mit einem Schaftteil (12), das an einem ersten Ende für eine Nietverbindung (16) mit einem Tafelelement (18), insbesondere mit einem Blechteil (18) ausgelegt ist und an seinem anderen Ende eine kugelförmige Ausbildung (22) aufweist, deren Kugeldurchmesser größer ist als der des Schaftteils,
**dadurch gekennzeichnet,**
**dass** ein zylindrischer Rohling teilweise in eine zylindrische Passage einer Matrize (50) aufgenommen wird und über die Stirnseite der Matrize hinausragt, dass im Bereich des Übergangs der Passage in die Stirnseite eine halbkugelförmige Vertiefung (74) in der Matrize ausgebildet ist, deren Kugeldurchmesser dem Kugeldurchmesser der erwünschten kugelförmigen Ausbildung des Bolzenelementes entspricht, dass ein Werkzeug (52) mit einer ebenfalls halbkugelförmigen Vertiefung auf das aus der Matrize herausragende freie Stirnende des zylindrischen Rohlings gedrückt wird und die Matrize und das Werkzeug in Anlage miteinander gebracht werden, um das aus der Matrize herausragende Ende des zylindrischen Rohlings zu der kugelförmigen Ausbildung durch Kaltverformung umzuformen.

15. Verfahren nach Anspruch 14,
**dadurch gekennzeichnet,**
**dass** im geschlossenen Zustand der Matrize und des Werkzeuges diese an einer Trennfläche aneinander anliegen, die einem Äquator der kugelförmigen Ausbildung entspricht und senkrecht zur Längsachse des zylindrischen Rohlings bzw. des Schaftteils (12) des Bolzenelementes (10) steht.

16. Matrize zur Anbringung eines Bolzenelements insbesondere jedoch nicht ausschließlich ein Bolzenelement nach einem der vorhergehenden Ansprüche 1 bis 10, mit einem Umformraum (138) der zwischen beweglichen Formteilen (116) und einem Anschlagelement (112) gebildet ist, wobei die Formteile (116) radial nach innen ragenden Nasen (142) im Bereich der offenen Stirnseite des Umformraumes (138) aufweisen, **dadurch gekennzeichnet, dass** das Anschlagelement (112) einen mittleren Pfosten (144) sowie eine gerundete Rollfläche (140) im Bereich des Bodens des Umformraumes (138) aufweist und dass die Nasen (142) Unterseiten (154) aufweisen, die als Anschlagflächen für die Stirnseite (24) eines rohrförmigen Nietabschnittes des Bolzenelements (10) dienen.

17. Matrize nach Anspruch 16, **dadurch gekennzeichnet, dass** das Anschlagelement (112), das von den Formteilen (116) umringt ist, mit den Formteilen axial beweglich innerhalb einer konusförmigen Aufnahme (110) des Matrizenkörpers (106) angeordnet ist.

18. Matrize nach Anspruch 16 oder 17, **dadurch gekennzeichnet, dass** die Formteile (116) entweder unmittelbar nebeneinander angeordnet sind oder durch Strukturelemente der Matrize, die den Umformraum mit achsparallen Flächen stellenweise zwischen den Formteilen begrenzen, voneinander im Abstand gehalten sind.

## Claims

1. Bolt element (10) having a shaft part (12) which is designed at a first end (14) for a rivet connection (16) to a panel element (18), in particular to a sheet metal part,
**characterized in that**
the shaft part (12) has a spherical formation (22) at its other end (20), the ball diameter (D) of which is larger than that (d) of the shaft part.

2. Bolt element in accordance with claim 1,
**characterized in that**
the shaft part (12) has at least substantially a constant diameter (d) over at least substantially its total length from the spherical formation (22) up to the first end (14).

3. Bolt element in accordance with claim 1 or claim 2,
**characterized in that**
the first end (14) of the shaft part (12) which is designed for the rivet connection (16) to the panel element (18) is made hollow and has at least substantially the same outer diameter as the shaft part.

4. Bolt element in accordance with claim 3,
**characterized in that**
the first end (14) of the shaft part (12) is formed in a manner known per se with piercing and riveting features.

5. Bolt element in accordance with claim 4,
**characterized in that**
the hollow first end of the shaft part (12) merges from a circularly cylindrical jacket surface into a rounded pressing and drawing edge and has a conical cutting face (30) at the inside.

6. Bolt element in accordance with any one of the preceding claims 3 to 5,
**characterized in that**
the inner space of the hollow first end of the shaft part (12) is made at least substantially circularly cylindrical.

7. Bolt element in accordance with any one of the preceding claims 3 to 6,
**characterized in that**
the hollow region of the shaft part (12) at the first end is made at least sufficiently long that adequate material is present in the hollow region in order to form a rivet bead (36) at the side of the component remote from the spherical formation (22), to bridge the thickness of the component and to form a ring fold (40) at the side of the component facing the spherical formation.

8. Bolt element in accordance with any one of the preceding claims,
**characterized in that**
the entire bolt element (10) is made hollow.

9. Bolt element in accordance with any one of the preceding claims,
**characterized in that**
the hollow shaft part (12) is provided with an internal thread.

10. Bolt element in accordance with any one of the preceding claims,
**characterized in that**
the spherical formation (22) has an equator line (46) which lies in a plane perpendicular to the longitudinal axis of the shaft part (12).

11. Component assembly comprising a bolt element (10) in accordance with any one of the preceding claims 1 to 10,
**characterized in that**
a rivet bead (36) is located at the side of the component remote from the spherical formation (22), whereas a ring fold is arranged at the side of the component facing the spherical formation and the component is clamped in the region of the connection to the shaft part (12) between the ring fold and the rivet bead.

12. Component assembly in accordance with claim 10,
**characterized in that**
the ring fold is arranged in a ring recess in the sheet metal part, with a ring surface of the ring fold facing the spherical formation (22) either being arranged fractionally below or fractionally above the side of the sheet metal part facing the shaft part (12) in the region of the rivet connection or at the same level as this side of the component.

13. Component assembly in accordance with claim 10 or claim 11,
**characterized in that**
a punching slug (44) is trapped inside the ring-like bead and thus presses against the latter.

14. Method of manufacturing a bolt element (10) in accordance with any one of the preceding claims 1 to 10 having a shaft part (12) which is designed at a first end for a rivet connection (16) to a panel element (18), in particular to a sheet metal part (18) and having, at its other end, a spherical formation (22), the ball diameter of which is larger than that of the shaft part,
**characterized in that**
a cylindrical blank is partly received in a cylindrical passage of a die (50) and projects beyond the end face of the die; **in that** a hemispherical recess (74) is formed in the die in the region of the transition of the passage into the end face, with the ball diameter of the hemispherical recess corresponding to the ball diameter of the desired spherical formation of the bolt element; **in that** a tool (52) with a likewise hemispherical recess is pressed onto the free end of the cylindrical blank projecting out of the die and the die and the tool are brought into contact with one another in order to reshape the end of the cylindrical blank projecting out of the die to the spherical formation by cold deformation.

15. Method in accordance with claim 14,
**characterized in that**,
in the closed state of the die and of the tool, these contact one another at a partition surface which corresponds to an equator of the spherical formation and stands perpendicular to the longitudinal axis of the cylindrical blank, i.e. of the shaft part (12) of the bolt element (10).

16. Die for the attachment of a bolt element, in particular, but not exclusively a bolt element in accordance with any one of the preceding claims 1 to 10, with a shaping space (138) which is formed between movable shaped parts (116) and an abutment element (112), with the shaped parts (116) having radially inwardly projecting noses (142) in the region of the open end of the shaping space (138), **characterized in that** the abutment element (122) has a central post (144) and also a rounded rolling surface (140) in the region of the base of the shaping space (138) and **in that** the noses (142) have lower sides (154) which serve as abutment surfaces for the end face (24) of a tubular rivet section of the bolt element (10).

17. Die in accordance with claim 16,
**characterized in that**
the abutment element (112) which is surrounded by the shaped parts (116) is arranged with the shaped parts axially movable within a conical recess (110) of the die body (106).

18. Die in accordance with claim 16 or claim 17,
**characterized in that**
the shaped parts (116) are either arranged directly alongside one another or are held spaced from one another by structure elements of the die which bound the shaping space with surfaces parallel to the axis at positions between the shaped parts.

## Revendications

1. Elément goujon (10) comprenant une partie tige (12) qui est conçue à une première extrémité (14) pour une liaison rivetée (16) à un élément de panneau (18), en particulier à une pièce en tôle, **caractérisé en ce que** la partie tige (12) présente à son autre extrémité (20) une conformation (22) en forme de bille dont le diamètre (D) est plus grand que le diamètre (d) de la partie tige.

2. Elément goujon selon la revendication 1, **caractérisé en ce que** la partie tige (12) présente au moins essentiellement un diamètre constant (d) sur au moins essentiellement sa longueur totale, depuis la conformation (22) en forme de bille jusqu'à la première extrémité (14).

3. Elément goujon selon l'une ou l'autre des revendications 1 et 2, **caractérisé en ce que** la première extrémité (14) de la partie tige (12), conçue pour la liaison rivetée (16) à l'élément de panneau (18), est réalisée creuse et présente au moins essentiellement le même diamètre extérieur que la partie tige.

4. Elément goujon selon la revendication 3, **caractérisé en ce que** la première extrémité (14) de la partie tige (12) est réalisée d'une manière connue en soi avec des caractéristiques d'estampage et de rivetage.

5. Elément goujon selon la revendication 4, **caractérisé en ce que** la première extrémité creuse de la partie tige (12) se transforme depuis une surface enveloppe cylindrique droite en une arête d'aboutement et d'emboutissage arrondie et présente à l'intérieur une surface de coupe conique (30).

6. Elément goujon selon l'une des revendications précédentes 3 à 5, **caractérisé en ce que** l'espace intérieur de la première extrémité creuse de la partie tige (12) est réalisé au moins essentiellement comme un cylindre droit.

7. Elément goujon selon l'une des revendications précédentes 3 à 6, **caractérisé en ce que** la région creuse de la partie tige (12) est dimensionnée à la première extrémité avec au moins une longueur telle qu'il se trouve suffisamment de matériau dans la région creuse pour réaliser un bordage de rivetage (36) sur le côté, détourné de la conformation (22) en forme de bille, du composant, afin de ponter l'épaisseur du composant et pour réaliser une feuillure annulaire (40) sur le côté, tourné vers la conformation en forme de bille, du composant.

8. Elément goujon selon l'une des revendications précédentes, **caractérisé en ce que** la totalité de l'élément goujon (10) est réalisée creuse.

9. Elément goujon selon l'une des revendications précédentes, **caractérisé en ce que** la partie tige creuse (12) est munie d'un taraudage.

10. Elément goujon selon l'une des revendications précédentes, **caractérisé en ce que** la conformation (22) en forme de bille présente une ligne équatoriale (46) se trouvant dans un plan qui est perpendiculaire a l'axe longitudinal de la partie tige (12).

11. Composant d'assemblage, constitué par un élément goujon (10) selon l'une des revendications 1 à 10 et par un composant, **caractérisé en ce qu'**un bordage de rivetage (36) se trouve sur le côté, détourné de la conformation (22) en forme de bille, du composant, tandis qu'une feuillure annulaire (40) est agencée sur le côté, tourné vers la conformation en forme de bille, du composant, et **en ce que** le composant est coincé entre la feuillure annulaire et le bordage de rivetage dans la région de la liaison à la partie tige (12).

12. Composant selon la revendication 10, **caractérisé en ce que** la feuillure annulaire est agencée dans un renfoncement annulaire dans la pièce en tôle, dans lequel une surface annulaire, tournée vers la conformation (22) en forme de bille, de la feuillure annulaire, est agencée soit légèrement en dessous, soit légèrement au-dessus du côté de la tôle tourné vers la partie tige (12), dans la région de la liaison rivetée, ou bien se trouve à la même hauteur que ce côté du composant.

13. Composant selon l'une ou l'autre des revendications 10 et 11, **caractérisé en ce qu'**une pastille d'estampage (44) est coincée à l'intérieur du bordage annulaire et presse de ce fait contre celui-ci.

14. Procédé pour la fabrication d'un élément goujon (10) selon l'une des revendications précédentes 1 à 10, comprenant une partie tige (12) qui est conçue à une première extrémité (14) pour une liaison rivetée (16) à un élément de panneau (18), en particulier à une pièce en tôle (18), et comprenant à son autre extrémité (20) une conformation (22) en forme de bille dont le diamètre est plus grand que le diamètre de la partie tige, **caractérisé en ce que** :
- une ébauche cylindrique est reçue partiellement dans un passage cylindrique d'une matrice (50) et dépasse au-delà de la face frontale de la matrice (50) ;
- il est réalisé dans la matrice, dans la région de la transition du passage dans la face frontale, un renfoncement (71) en forme de demi-bille dont le diamètre correspond au diamètre de la conformation en forme de bille désirée de l'élément goujon ; et
- un outil (52) comprenant un renfoncement également en forme de demi-bille est pressé sur l'extrémité frontale libre de l'ébauche cylindrique, laquelle dépasse de la matrice, et la matrice et l'outil sont amenés en contact mutuel pour transformer l'extrémité de l'ébauche cylindrique, laquelle dépasse de la matrice, pour donner la conformation en forme de bille par formage à froid.

15. Procédé selon la revendication 14, **caractérisé en ce que**, dans l'état fermé de la matrice et de l'outil, ceux-ci s'appliquent l'un sur l'autre au niveau d'une surface de séparation qui correspond à un équateur de la conformation en forme de bille et qui est perpendiculaire à l'axe longitudinal de l'ébauche cylindrique ou de la partie tige (12) de l'élément goujon (10).

16. Matrice pour la mise en place d'un élément goujon (10), en particulier, mais pas exclusivement, un élément goujon selon l'une des revendications précédentes 1 à 10, comprenant un compartiment de mise en forme (138) qui est réalisé entre des pièces de formage mobiles (116) et un élément de butée (112), dans laquelle les pièces de formage (116) présentent des tenons (142) qui dépassent radialement vers l'intérieur, dans la région de la face frontale ouverte du compartiment de mise en forme (138), **caractérisée en ce que** l'élément de butée (112) présente un pilier médian (144) ainsi qu'une surface de roulement arrondie (140) dans la région du fond du compartiment de mise en forme (138), et **en ce que** les tenons (142) présentent des faces inférieures (154) qui servent de surface de butée pour la face frontale (24) d'un tronçon de rivetage tubulaire de l'élément goujon (10).

17. Matrice selon la revendication 16, **caractérisée en ce que** l'élément de butée (112), qui est entouré des pièces de formage (116), est agencé avec les pièces de formage avec mobilité axiale dans un logement conique (110) du corps de matrice (106).

18. Matrice selon l'une ou l'autre des revendications 16 et 17, **caractérisée en ce que** les pièces de formage (116) sont soit agencées directement les unes à côté des autres, soit maintenues à distance les unes des autres par des éléments structurels de la matrice, lesquels limitent localement le compartiment de mise en forme entre les pièces de formage par des surfaces parallèles à l'axe.
